# EUROPEAN PATENT APPLICATION

(11) **EP 4 722 176 A1**
(43) Date of publication of application: **08.04.2026**
(21) Application number: 24814960.1
(22) Date of filing: 02.04.2024
(51) Int. Cl.: C03C 27/12, B32B 17/04, B32B 27/36

(54) **INTERMEDIATE FILM FOR LAMINATED GLASS, PRODUCTION METHOD FOR INTERMEDIATE FILM FOR LAMINATED GLASS, AND LAMINATED GLASS**

(30) Priority: 29.05.2023 JP 2023088001
(71) Applicant: Sekisui Chemical Co., Ltd., Osaka-shi, Osaka 530-8565 (JP)
(72) Inventor: YAMAMOTO, Yuuki, Kouka-shi, Shiga 528-8585 (JP); OOTA, Yuusuke, Kouka-shi, Shiga 528-8585 (JP)
(74) Representative: Ter Meer Steinmeister & Partner
(86) International application number: PCT/JP2024/013550
(87) International publication number: WO 2024/247473

(57) **Abstract**

Provided is an interlayer film for laminated glass capable of keeping the haze value low when a heat resistance test at 100°C is conducted for the laminated glass, although the interlayer film has a polyethylene terephthalate film. An interlayer film for laminated glass according to the present invention includes a first resin layer containing a thermoplastic resin, a polyethylene terephthalate film, and a second resin layer containing a thermoplastic resin, in this order, and has a ratio of absorbance A at a wavelength of 1930 nm to absorbance B at a wavelength of 1705 nm of 0.50 or less.

## Description

### TECHNICAL FIELD

The present invention relates to an interlayer film for laminated glass that is used for obtaining laminated glass, and a method for producing the same. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

In order to enhance the heat shielding property or enhance the strength, an interlayer film having a polyethylene terephthalate film is sometimes used. An interlayer film having a polyethylene terephthalate film is disclosed, for example, in the following Patent Document 1.

### Related Art Document

### Patent Document

Patent Document 1: JP 2010-265165 A

### SUMMARY OF THE INVENTION

### PROBLEMS TO BE SOLVED BY THE INVENTION

As a test for laminated glass prepared with an interlayer film, a heat resistance test at 100°C in which laminated glass is left to stand for a predetermined period in an environment at 100°C is sometimes conducted.

However, in the case of a laminated glass prepared with a conventional interlayer film having a polyethylene terephthalate film, the haze value of the laminated glass is high when the heat resistance test at 100°C is conducted. The problem that the haze value of the laminated glass is high in the heat resistance test at 100°C arises only when an interlayer film having a polyethylene terephthalate film is used, but does not arise when an interlayer film not having a polyethylene terephthalate film is used.

It is an object of the present invention to provide an interlayer film for laminated glass capable of keeping the haze value low when a heat resistance test at 100°C is conducted for the laminated glass, although the interlayer film has a polyethylene terephthalate film. It is also an object of the present invention to provide a method for producing the interlayer film for laminated glass. Moreover, it is also an object of the present invention to provide a laminated glass prepared with the interlayer film for laminated glass.

### MEANS FOR SOLVING THE PROBLEMS

In the present specification, the following interlayer film for laminated glass, a method for producing an interlayer film for laminated glass, and a laminated glass are disclosed.

Item 1. An interlayer film for laminated glass including:
a first resin layer containing a thermoplastic resin;
a polyethylene terephthalate film; and
a second resin layer containing a thermoplastic resin, in this order, and having
a ratio of absorbance A at a wavelength of 1930 nm to absorbance B at a wavelength of 1705 nm of 0.50 or less.

Item 2. The interlayer film for laminated glass according to item 1, in which the polyethylene terephthalate film is a multilayer polyethylene terephthalate film having two or more polyethylene terephthalate layers and not having a metal layer, or a metal layer-containing polyethylene terephthalate film having a polyethylene terephthalate layer and a metal layer.

Item 3. The interlayer film for laminated glass according to item 1 or 2, in which
the thermoplastic resin contained in the first resin layer includes a polyvinyl acetal resin, and
the thermoplastic resin contained in the second resin layer includes a polyvinyl acetal resin.

Item 4. A method for producing an interlayer film for laminated glass, the method being a method for producing the interlayer film for laminated glass according to any one of items 1 to 3, the method including the steps of:
obtaining a laminate having a layer for formation of first resin layer containing a thermoplastic resin, a polyethylene terephthalate film, and a layer for formation of second resin layer containing a thermoplastic resin in this order; and
aging the laminate so that a ratio of absorbance A at a wavelength of 1930 nm to absorbance B at a wavelength of 1705 nm in the obtained interlayer film is 0.50 or less.

Item 5. A method for producing an interlayer film for laminated glass, the method being a method for producing the interlayer film for laminated glass according to any one of items 1 to 3, the method including the step of
aging at least one layer of a layer for formation of first resin layer containing a thermoplastic resin, or a layer for formation of second resin layer containing a thermoplastic resin so that a ratio of absorbance A at a wavelength of 1930 nm to absorbance B at a wavelength of 1705 nm in the obtained interlayer film is 0.50 or less.

Item 6. A laminated glass including:
a first lamination glass member;
a second lamination glass member; and
the interlayer film for laminated glass according to any one of items 1 to 3,
the interlayer film for laminated glass being arranged between the first lamination glass member and the second lamination glass member.

### EFFECT OF THE INVENTION

An interlayer film for laminated glass according to the present invention includes a first resin layer containing a thermoplastic resin, a polyethylene terephthalate film, and a second resin layer containing a thermoplastic resin, in this order, and has a ratio of absorbance A at a wavelength of 1930 nm to absorbance B at a wavelength of 1705 nm of 0.50 or less. In the interlayer film for laminated glass according to the present invention, since the aforementioned configuration is provided, it is possible to keep the haze value low when a heat resistance test at 100°C is conducted for the laminated glass, although the interlayer film has a polyethylene terephthalate film.

### BRIEF DESCRIPTION OF DRAWINGS

[Fig. 1] Fig. 1 is a chart for explaining a method for calculating absorbance A at a wavelength of 1930 nm and absorbance B at a wavelength of 1705 nm.
[Fig. 2] Fig. 2 is a sectional view schematically showing an interlayer film for laminated glass according to one embodiment of the present invention.
[Fig. 3] Fig. 3 is a sectional view schematically showing an example of a laminated glass prepared with the interlayer film for laminated glass shown in Fig. 2.

### MODES FOR CARRYING OUT THE INVENTION

Hereinafter, the present invention will be described in detail.

### (Interlayer film for laminated glass)

The interlayer film for laminated glass (in the present specification, sometimes abbreviated as "interlayer film") according to the present invention is used for laminated glass.

The interlayer film includes a first resin layer containing a thermoplastic resin, a polyethylene terephthalate film, and a second resin layer containing a thermoplastic resin in this order. In the interlayer film, the first resin layer is arranged on a first surface side of the polyethylene terephthalate film, and the second resin layer is arranged on a second surface side opposite to the first surface of the polyethylene terephthalate film.

The interlayer film may have a three-layer structure of the first resin layer, the polyethylene terephthalate film, and the second resin layer. The interlayer film may have a three or more-layer structure, may have a ten or less-layer structure, and may have a five or less-layer structure. When the polyethylene terephthalate film included in the interlayer film has a plurality of layers, the polyethylene terephthalate film having a plurality of layers is counted as one layer in counting the number of layers of the interlayer film. A polyethylene terephthalate film having a plurality of layers can be regarded as a one-layer member as a whole in the interlayer film.

In the interlayer film, a ratio of absorbance A at a wavelength of 1930 nm to absorbance B at a wavelength of 1705 nm (absorbance A/absorbance B) is 0.50 or less.

The absorbance A corresponds to absorbance of water, and the absorbance B corresponds to absorbance of a methylene group. The present inventors found that the haze value can be kept low in a heat resistance test at 100°C for the laminated glass when the ratio (absorbance A/absorbance B) is 0.50 or less, although the interlayer film has a polyethylene terephthalate film. Therefore, in the laminated glass prepared with the interlayer film, the haze value is difficult to rise even when the laminated glass is used, for example, in a high temperature environment.

The ratio of absorbance A at a wavelength of 1930 nm to absorbance B at a wavelength of 1705 nm (absorbance A/absorbance B) is preferably 0.06 or more, more preferably 0.10 or more, and is preferably 0.48 or less, more preferably 0.45 or less, still more preferably 0.40 or less, further preferably 0.35 or less, still further preferably 0.30 or less, especially preferably 0.25 or less, most preferably 0.20 or less. When the ratio (absorbance A/absorbance B) is the above lower limit or more, it is possible to further enhance the adhesivity between the interlayer film and a lamination glass member. When the ratio (absorbance A/absorbance B) is the above upper limit or less, it is possible to exert the effect of the present invention more effectively.

The absorbance A at a wavelength of 1930 nm is preferably 0.01 or more, more preferably 0.02 or more, and is preferably 0.10 or less, more preferably 0.08 or less, further preferably 0.05 or less. When the absorbance A is the above lower limit or more, it is possible to further enhance the adhesivity between the interlayer film and a lamination glass member. When the absorbance A is the above upper limit or less, it is possible to exert the effect of the present invention more effectively.

Each of the absorbance A and the absorbance B is measured in the following manner.

### (1) Preparation of laminated glass X

The interlayer film is arranged between two sheets of clear glass conforming to JIS R3202:1996 to prepare a laminated glass X (laminated glass for measurement of absorbance). It is preferred that the laminated glass X be prepared in the following manner.

The interlayer film is sandwiched between two sheets of clear glass conforming to JIS R3202:1996 having a thickness of 2 mm to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain the laminated glass X.

### (2) Measurement of absorbance

In the obtained laminated glass X, the position of 3 cm from one end toward the other end is referred to as a first position, and the position of 5 cm from one end toward the other end is referred to as a second position. The one end and the other end are end parts of both sides facing each other in the laminated glass X. Absorbance at each of the first position and the second position of the laminated glass X is measured using a near-infrared spectrophotometer (for example, "V-570" available from JASCO Corporation) under the conditions: a bandwidth of 2 nm, a scanning speed of 1000 nm/minute, a scanning range of 1550 nm to 2050 nm and a data capture interval of 0.5 nm. At the same wavelength, the absorbance at the first position and the absorbance at the second position are averaged. From the averaged absorbance, an absorbance spectrum is prepared.

In the prepared absorbance spectrum, the line connecting the position of absorbance at a wavelength of 1873 nm and the position of absorbance at a wavelength of 1984 nm is set as a baseline for absorbance A. An absolute value of difference between absorbance at a wavelength of 1930 nm on the baseline for absorbance A, and absorbance at a wavelength of 1930 nm on the prepared absorbance spectrum is defined as absorbance A at a wavelength of 1930 nm of the interlayer film.

In the prepared absorbance spectrum, the position of absorbance at a wavelength of 1670 nm is set as a baseline for absorbance B. An absolute value of difference between absorbance at a wavelength of 1670 nm on the prepared absorbance spectrum, and absorbance at a wavelength of 1705 nm on the prepared absorbance spectrum is defined as absorbance B at a wavelength of 1705 nm of the interlayer film.

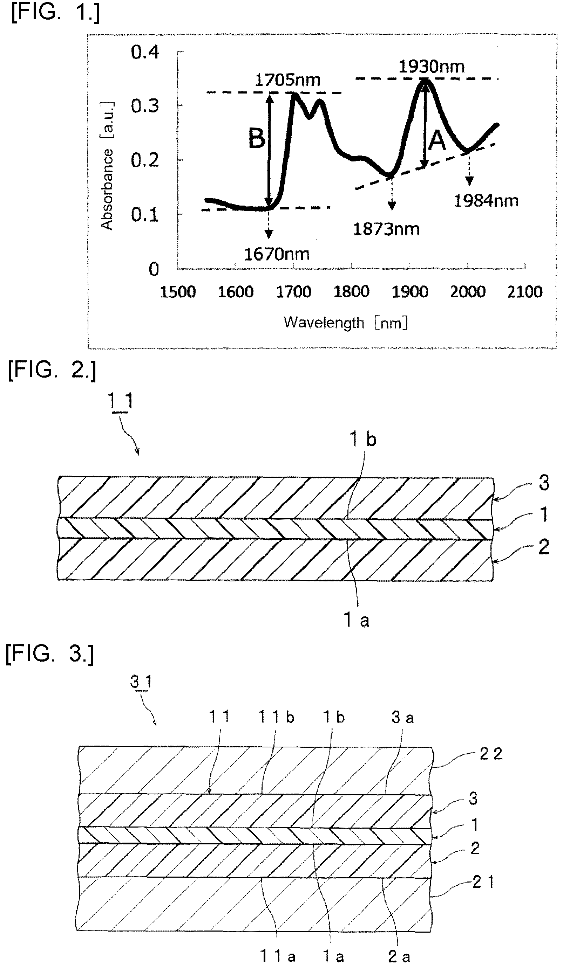

Fig. 1 is a chart for explaining a method for calculating absorbance A at a wavelength of 1930 nm and absorbance B at a wavelength of 1705 nm. Fig. 1 shows an example of absorbance spectrum prepared from absorbances averaged from absorbance at the first position and absorbance at the second position. As shown in Fig. 1, an absolute value of difference between absorbance at a wavelength of 1930 nm on the baseline for absorbance A and absorbance at a wavelength of 1930 nm on the absorbance spectrum is the absorbance A. Also, as shown in Fig. 1, an absolute value of difference between absorbance at a wavelength of 1670 nm on the absorbance spectrum and absorbance at a wavelength of 1705 nm on the absorbance spectrum is the absorbance B.

The laminated glass X is prepared for measuring absorbance. In the interlayer film, the laminated glass (laminated glass product) may be prepared with a lamination glass member other than two sheets of clear glass conforming to JIS R3202:1996, and the laminated glass (laminated glass product) may be prepared with a lamination glass member other than clear glass.

The interlayer film having the ratio (absorbance A/absorbance B) of 0.50 or less can be obtained by the later-described method for producing an interlayer film.

Hereinafter, specific embodiments of the present invention will be described with reference to the drawings.

Fig. 2 is a sectional view schematically showing an interlayer film for laminated glass according to one embodiment of the present invention.

An interlayer film 11 shown in Fig. 2 is used for obtaining laminated glass. The interlayer film 11 is an interlayer film for laminated glass. The interlayer film 11 includes a polyethylene terephthalate film 1, a first resin layer 2, and a second resin layer 3. The first resin layer 2 is arranged on a first surface 1a side of the polyethylene terephthalate film 1 and to be layered thereon. The second resin layer 3 is arranged on a second surface 1b side opposite to the first surface 1a of the polyethylene terephthalate film 1 and to be layered thereon. The polyethylene terephthalate film 1 is an intermediate layer. Each of the first resin layer 2 and the second resin layer 3 is a protective layer and is a surface layer in the present embodiment. The polyethylene terephthalate film 1 is arranged between the first resin layer 2 and the second resin layer 3 and to be sandwiched therebetween. Therefore, the interlayer film 11 has a multi-layer structure (the first resin layer 2/the polyethylene terephthalate film 1/the second resin layer 3) in which the first resin layer 2, the polyethylene terephthalate film 1, and the second resin layer 3 are layered in this order.

In this connection, other layer may be arranged between the first resin layer 2 and the polyethylene terephthalate film 1 and between the polyethylene terephthalate film 1 and the second resin layer 3, respectively. It is preferred that the first resin layer 2 and the polyethylene terephthalate film 1, and the polyethylene terephthalate film 1 and the second resin layer 3 be directly layered, respectively. As the other layer, an adhesive layer can be recited.

Hereinafter, other details of members constituting the interlayer film and the laminated glass according to the present invention are described.

### (Polyethylene terephthalate film)

The polyethylene terephthalate film (PET film) contains polyethylene terephthalate. The interlayer film having a polyethylene terephthalate film is capable of enhancing the heat shielding property or enhancing the strength. Also, the interlayer film having a polyethylene terephthalate film is capable of effectively preventing a component contained in one of the resin layers from migrating to the other of the resin layers.

Examples of the polyethylene terephthalate film include a monolayer polyethylene terephthalate film having one polyethylene terephthalate layer and not having a metal layer, a multilayer polyethylene terephthalate film having two or more polyethylene terephthalate layers and not having a metal layer, and a metal layer-containing polyethylene terephthalate film having a polyethylene terephthalate layer and a metal layer, and the like.

The polyethylene terephthalate film may be the monolayer polyethylene terephthalate film, may be the multilayer polyethylene terephthalate film, and may be the metal layer-containing polyethylene terephthalate film.

From the viewpoint of further enhancing the heat shielding property, it is preferred that the polyethylene terephthalate film be the multilayer polyethylene terephthalate film or the metal layer-containing polyethylene terephthalate film.

The multilayer polyethylene terephthalate film has two or more polyethylene terephthalate layers. The multilayer polyethylene terephthalate film may have two polyethylene terephthalate layers, may have two or more polyethylene terephthalate layers, may have three or more polyethylene terephthalate layers, may have five or more polyethylene terephthalate layers, may have 1000 or less polyethylene terephthalate layers, may have 100 or less polyethylene terephthalate layers, and may have 50 or less polyethylene terephthalate layers.

The metal layer-containing polyethylene terephthalate film may have one polyethylene terephthalate layer, may have two polyethylene terephthalate layers, may have two or more polyethylene terephthalate layers, may have three or more polyethylene terephthalate layers, may have five or more polyethylene terephthalate layers, may have 1000 or less polyethylene terephthalate layers, may have 100 or less polyethylene terephthalate layers, and may have 50 or less polyethylene terephthalate layers.

The metal layer-containing polyethylene terephthalate film may have one metal layer, may have two metal layers, may have two or more metal layers, may have three or more metal layers, may have five or more metal layers, may have 1000 or less metal layers, may have 100 or less metal layers, and may have 50 or less metal layers. Examples of the material of the metal layer include aluminum, copper, silver, gold, palladium, and alloys containing these metals. The material of the metal layer may be used alone, and two or more kinds thereof may be used in combination.

In the metal layer-containing polyethylene terephthalate film, it is preferred that the metal layer be arranged on the outer surface of the polyethylene terephthalate layer. In the metal layer-containing polyethylene terephthalate film, it is preferred that at least one of surface layers be the metal layer.

In the metal layer-containing polyethylene terephthalate film, it is preferred that the metal layer be a metal sputtered layer. The metal sputtered layer can be formed by metal sputtering. A coating layer of metal or a mixed oxide of metal may be imparted to both faces or either face of the metal layer. Examples of the material of the coating layer include ZnO, Al₂O₃, Ga₂O₃, InO₃, MgO, Ti, NiCr and Cu.

The metal layer-containing polyethylene terephthalate film may have a dielectric layer. In the metal layer-containing polyethylene terephthalate film, a metal layer and a dielectric layer may be layered alternately in any numbers of layers on the polyethylene terephthalate layer. In the metal layer-containing polyethylene terephthalate film having a dielectric layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer. Examples of the material of the dielectric layer include indium oxide.

### (First resin layer and second resin layer)

### <Thermoplastic resin>

The first resin layer contains a thermoplastic resin (hereinafter, sometimes described as a thermoplastic resin (1)). It is preferred that the thermoplastic resin (1) include a polyvinyl acetal resin. It is preferred that the first resin layer contain a polyvinyl acetal resin as the thermoplastic resin (1). The second resin layer contains a thermoplastic resin (hereinafter, sometimes described as a thermoplastic resin (2)). It is preferred that the thermoplastic resin (2) include a polyvinyl acetal resin. It is preferred that the second resin layer contain a polyvinyl acetal resin as the thermoplastic resin (2).

The thermoplastic resin (1) and the thermoplastic resin (2) may be the same as or different from each other. One kind of each of the thermoplastic resin (1) and the thermoplastic resin (2) may be used alone, and two or more kinds thereof may be used in combination.

In the following description, the configuration common to the thermoplastic resin (1) and the thermoplastic resin (2) is described merely as "thermoplastic resin".

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl acetate resin, a polystyrene resin, and an ionomer resin. Thermoplastic resins other than these may be used.

It is preferred that the thermoplastic resin be a polyvinyl acetal resin. By using a polyvinyl acetal resin and a plasticizer together, the adhesive force of the resin layer to other layer such as a lamination glass member and a polyethylene terephthalate film is further enhanced.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more, and is preferably 5000 or less, more preferably 4000 or less, further preferably 3500 or less. When the average polymerization degree is the above lower limit or more, the penetration resistance of laminated glass is further enhanced. When the average polymerization degree is the above upper limit or less, formation of a resin layer is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the resin layer is sufficiently lowered.

The aldehyde is not particularly limited. In general, an aldehyde having 1 to 10 carbon atoms is suitably used. Examples of the aldehyde having 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

A content of the hydroxyl group (the amount of hydroxyl groups) of the polyvinyl acetal resin is preferably 15% by mole or more, more preferably 18% by mole or more, further preferably 20% by mole or more, and especially preferably 28% by mole or more, and is preferably 40% by mole or less, more preferably 35% by mole or less, and further preferably 32% by mole or less. When the content of the hydroxyl group is the above lower limit or more, the adhesive force of the resin layer further increases. Moreover, when the content of the hydroxyl group is the above upper limit or less, the flexibility of the resin layer is enhanced and the handling of the resin layer is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, further preferably 0.5% by mole or more and is preferably 30% by mole or less, more preferably 25% by mole or less, further preferably 20% by mole or less, especially preferably 15% by mole or less, most preferably 3% by mole or less. When the acetylation degree is the above lower limit or more, the compatibility between the polyvinyl acetal resin and a plasticizer is enhanced. When the acetylation degree is the above upper limit or less, the moisture resistance of the laminated glass is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, and preferably 85% by mole or less, more preferably 75% by mole or less, and further preferably 70% by mole or less. When the acetalization degree is the above lower limit or more, the compatibility between the polyvinyl acetal resin and a plasticizer is enhanced. When the acetalization degree is the above-described upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin contained in the first resin layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the first resin layer, the content of the polyvinyl acetal resin is preferably 100% by weight or less. It is preferred that the main ingredient (50% by weight or more) of the thermoplastic resin of the first resin layer be a polyvinyl acetal resin.

In 100% by weight of the thermoplastic resin contained in the second resin layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second resin layer, the content of the polyvinyl acetal resin is preferably 100% by weight or less. It is preferred that the main ingredient (50% by weight or more) of the thermoplastic resin of the second layer be a polyvinyl acetal resin.

### <Plasticizer>

From the viewpoint of further enhancing the adhesive force of the resin layer, it is preferred that the first resin layer contain a plasticizer (hereinafter, sometimes described as a plasticizer (1)). From the viewpoint of further enhancing the adhesive force of the resin layer, it is preferred that the second resin layer contain a plasticizer (hereinafter, sometimes described as a plasticizer (2)). It is especially preferred that a resin layer contain a plasticizer when the thermoplastic resin contained in the resin layer is a polyvinyl acetal resin. It is preferred that a layer containing a polyvinyl acetal resin contain a plasticizer.

In the following description, the configuration common to the plasticizer (1) and the plasticizer (2) is described merely as "plasticizer".

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

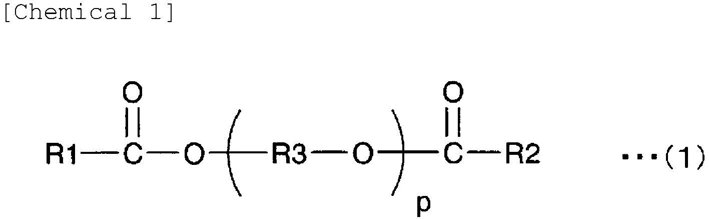

In the foregoing formula (1), R1 and R2 each represent an organic group with 2 to 10 carbon atoms, R3 represents an ethylene group, an isopropylene group, or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

The content of the plasticizer (1) contained in the first resin layer per 100 parts by weight of the thermoplastic resin (1) contained in the first resin layer is defined as content (1). The content (1) is preferably 25 parts by weight or more, more preferably 30 parts by weight or more, further preferably 35 parts by weight or more, and is preferably 75 parts by weight or less, more preferably 60 parts by weight or less, further preferably 50 parts by weight or less, especially preferably 40 parts by weight or less. When the content (1) is the above lower limit or more, the penetration resistance of the laminated glass is further enhanced. When the content (1) is the above upper limit or less, the transparency of laminated glass is further enhanced.

The content of the plasticizer (2) contained in the second resin layer per 100 parts by weight of the thermoplastic resin (2) contained in the second resin layer is defined as content (2). The content (2) is preferably 25 parts by weight or more, more preferably 30 parts by weight or more, further preferably 35 parts by weight or more, and is preferably 75 parts by weight or less, more preferably 60 parts by weight or less, further preferably 50 parts by weight or less, especially preferably 40 parts by weight or less. When the content (2) is the above lower limit or more, the penetration resistance of the laminated glass is further enhanced. When the content (2) is the above upper limit or less, the transparency of laminated glass is further enhanced.

### <Heat shielding substance>

It is preferred that the interlayer film contain a heat shielding substance. It is preferred that the first resin layer contain a heat shielding substance. The first resin layer need not contain a heat shielding substance. It is preferred that the second resin layer contain a heat shielding substance. The second resin layer need not contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

### Ingredient X:

It is preferred that the interlayer film contain at least one kind of Ingredient X among a phthalocyanine compound, a naphthalocyanine compound, and an anthracyanine compound. It is preferred that the first resin layer contain the Ingredient X. It is preferred that the second resin layer contain the Ingredient X. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atom(s) or copper atom(s) and a derivative of phthalocyanine containing vanadium atom(s) or copper atom(s). From the viewpoint of still further enhancing the heat shielding property of the interlayer film and the laminated glass, it is preferred that the Ingredient X have a structural unit in which an oxygen atom is bonded to a vanadium atom.

In 100% by weight of the layer containing the Ingredient X (the first resin layer or the second resin layer), the content of the Ingredient X is preferably 0.0005% by weight or more, more preferably 0.005% by weight or more, further preferably 0.01% by weight or more, and especially preferably 0.02% by weight or more and is preferably 0.2% by weight or less, more preferably 0.1% by weight or less, further preferably 0.05% by weight or less, and especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first resin layer contain the heat shielding particles. It is preferred that the second resin layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particles be particles formed from a metal oxide (metal oxide particles).

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, tungsten oxide particles (sodium-doped tungsten oxide particles, cesium-doped tungsten oxide particles, thallium-doped tungsten oxide particles, and rubidium-doped tungsten oxide particles, etc.), tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the interlayer film and the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the interlayer film and the laminated glass, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, and is preferably 0.1 µm or less, more preferably 0.05 µm or less. When the average particle diameter is the above-described lower limit or more, the heat ray shielding property is sufficiently enhanced. When the average particle diameter is the above-described upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the layer containing the heat shielding particles (the first resin layer or the second resin layer), the content of the heat shielding particles (in particular, the content of tungsten oxide particles) is preferably 0.01% by weight or more, more preferably 0.1% by weight or more, further preferably 1% by weight or more, and especially preferably 1.5% by weight or more and is preferably 6% by weight or less, more preferably 5.5% by weight or less, further preferably 4% by weight or less, especially preferably 3.5% by weight or less, and most preferably 3% by weight or less. When the content of the heat shielding particles is the above lower limit or more and the above upper limit or less, the heat shielding property is sufficiently enhanced and the visible light transmittance is sufficiently enhanced.

### <Metal salt>

It is preferred that the interlayer film contain at least one kind of metal salt (hereinafter, sometimes described as Metal salt M) of alkali metal salts and alkali earth metal salts. It is preferred that the first resin layer contain the Metal salt M. It is preferred that the second resin layer contain the Metal salt M. The alkali earth metal means six metals of Be, Mg, Ca, Sr, Ba, and Ra. Use of the Metal salt M facilitates controlling of the adhesivity between the interlayer film and a lamination glass member such as a glass plate or the adhesivity between layers in the interlayer film. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is more preferred that the metal salt M contained in the interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate having 2 to 16 carbon atoms and the potassium carboxylate having 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the layer containing the Metal salt M (the first resin layer or the second resin layer) is preferably 5 ppm or more, more preferably 10 ppm or more, further preferably 20 ppm or more, preferably 300 ppm or less, more preferably 250 ppm or less and further preferably 200 ppm or less. When the total of the contents of Mg and K is the above lower limit or more and the above upper limit or less, the adhesivity between the interlayer film and a lamination glass member (e.g., glass plate) or the adhesivity between layers in the interlayer film can be further well controlled.

### <Ultraviolet ray screening agent>

It is preferred that the interlayer film contain an ultraviolet ray screening agent. It is preferred that the first resin layer contain an ultraviolet ray screening agent. It is preferred that the second resin layer contain an ultraviolet ray screening agent. By the use of an ultraviolet ray screening agent, even when the laminated glass is used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the layer containing the ultraviolet ray screening agent (the first resin layer or the second resin layer), the content of the ultraviolet ray screening agent is preferably 0.1% by weight or more, more preferably 0.2% by weight or more, further preferably 0.3% by weight or more, especially preferably 0.5% by weight or more, and is preferably 2.5% by weight or less, more preferably 2% by weight or less, further preferably 1% by weight or less, especially preferably 0.8% by weight or less. When the content of the ultraviolet ray screening agent is the above-described lower limit or more, deterioration in visible light transmittance after a lapse of a period is further suppressed. When the content of the ultraviolet ray screening agent is the above-described upper limit or less, deterioration in visible light transmittance after a lapse of a period of the interlayer film and the laminated glass can be significantly suppressed.

### <Oxidation inhibitor>

It is preferred that the interlayer film contain an oxidation inhibitor. It is preferred that the first resin layer contain an oxidation inhibitor. It is preferred that the second resin layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl) butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid) ethylenebis (oxyethylene), and the like. One kind or two or more kinds among these oxidation inhibitors are suitably used.

Examples of the phosphorus-based oxidation inhibitor include tridecyl phosphite, tris (tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, and 2,2'-methylenebis (4, 6-di-t-butyl-1-phenyloxy) (2-ethylhexyloxy) phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the interlayer film and the laminated glass, in order to maintain high visible light transmittance thereof over a long period of time, the content of the oxidation inhibitor is preferably 0.03% by weight or more, more preferably 0.1% by weight or more in 100% by weight of the layer containing the oxidation inhibitor (the first resin layer or the second resin layer). Moreover, since an effect commensurate with the addition of an oxidation inhibitor is not attained, it is preferred that the content of the oxidation inhibitor be 2% by weight or less in 100% by weight of the layer containing the oxidation inhibitor (the first resin layer or the second resin layer).

### <Other ingredient>

Each of the first resin layer and the second resin layer may contain additives such as a light stabilizer, a coupling agent, a dispersing agent, a surfactant, a flame retardant, an antistatic agent, a pigment, a dye, an adhesive force regulator other than metal salt, a moisture-resistance agent, a fluorescent brightening agent, and an infrared ray absorber, as necessary. One kind of the other ingredients may be used alone, and two or more kinds thereof may be used in combination.

### (Other details of interlayer film for laminated glass)

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, and is preferably 3 mm or less, more preferably 1.5 mm or less. When the thickness is the above lower limit or more, the penetration resistance and the flexural rigidity of laminated glass are further enhanced. When the thickness is the above upper limit or less, the transparency of the interlayer film is further improved.

The interlayer film may be an interlayer film having a uniform thickness, or may be an interlayer film having varying thickness. The sectional shape of the interlayer film may be a rectangular shape or may be a wedge-like shape. When the sectional shape of the interlayer film is a wedge shape (in the case of an interlayer film having varying thickness), the thickness of the interlayer film means an average thickness.

As a method for producing the interlayer film, for example, the methods described in the following production method (1) and the following production method (2) and so on can be recited. The method for producing an interlayer film is preferably the following production method (1) or the following production method (2).

The production method (1) for interlayer film includes the step of obtaining a laminate having a layer for formation of first resin layer containing a thermoplastic resin, a polyethylene terephthalate film, and a layer for formation of second resin layer containing a thermoplastic resin in this order. The production method (1) for interlayer film includes the step of aging the laminate so that a ratio of absorbance A at a wavelength of 1930 nm to absorbance B at a wavelength of 1705 nm (absorbance A/absorbance B) in the obtained interlayer film is 0.50 or less.

It is preferred that the step of aging the laminate be conducted before the interlayer film is arranged between the first lamination glass member and the second lamination glass member.

The production method (2) for interlayer film includes the step of aging at least one layer of the layer for formation of first resin layer containing a thermoplastic resin, or a layer for formation of second resin layer containing a thermoplastic resin so that a ratio of absorbance A at a wavelength of 1930 nm to absorbance B at a wavelength of 1705 nm (absorbance A/absorbance B) in the obtained interlayer film is 0.50 or less. The step may be a step of aging the layer for formation of first resin layer, may be a step of aging the layer for formation of second resin layer, and may be a step of aging each of the layer for formation of first resin layer and the layer for formation of second resin layer.

The production method (2) for interlayer film preferably includes the step of obtaining a laminate having a layer for formation of first resin layer, a polyethylene terephthalate film, and a layer for formation of second resin layer in this order, after the aging step.

In the step of obtaining the laminate in the production methods (1), (2) for interlayer film, the method for obtaining the laminate is not particularly limited. For example, a method of layering the layer for formation of first resin layer, the polyethylene terephthalate film, and the layer for formation of second resin layer in this order, and the like can be recited.

The aging step in the production methods (1), (2) for interlayer film is preferably a step (A) of maintaining for 6 hours or more under an environment of an aging temperature of 20°C or more and 30°C or less and an aging humidity of 10%RH or more and 40%RH or less, or a step (B) of maintaining for 8 minutes or less under an environment of an aging temperature of 40°C or more and 60°C or less and an aging humidity of 85%RH or more and 99%RH or less. In this case, it becomes easy to adjust the ratio (absorbance A/absorbance B) to 0.50 or less. In particular, when the aging temperature is 20°C or more and 30°C or less, it is necessary to keep the aging temperature at the time of aging significantly low so as to adjust the ratio (absorbance A/absorbance B) to 0.50 or less.

From the viewpoint of controlling the ratio (absorbance A/absorbance B) more easily, each of the aging temperature, the aging humidity and the aging time in the step (A) and the step (B) satisfy the followings.

The aging temperature in the step (A) is preferably 22°C or more, more preferably 23°C or more, and is preferably 28°C or less, more preferably 27°C or less. The aging humidity in the step (A) is preferably 15%RH or more, more preferably 20%RH or more, and is preferably 35%RH or less, more preferably 30%RH or less. The aging time in the step (A) is preferably 7 hours or more, more preferably 8 hours or more. The upper limit of the aging time in the step (A) is not particularly limited. The aging time in the step (A) is for example, 24 hours or less.

The aging temperature in the step (B) is preferably 43°C or more, more preferably 45°C or more, and is preferably 58°C or less, more preferably 55°C or less. The aging humidity in the step (B) is preferably 90%RH or more, more preferably 93%RH or more, and is preferably 98%RH or less, more preferably 97%RH or less. The aging time in the step (B) is preferably 7 minutes or less, more preferably 6 minutes or less. The lower limit of the aging time in the step (B) is not particularly limited. The aging time in the step (B) is for example, 0.5 minutes or more.

### (Laminated glass)

A laminated glass according to the present invention includes a first lamination glass member, a second lamination glass member and an interlayer film. In the laminated glass according to the present invention, the interlayer film is arranged between the first lamination glass member and the second lamination glass member.

Fig. 3 is a sectional view schematically showing an example of a laminated glass prepared with the interlayer film for laminated glass shown in Fig. 2.

A laminated glass 31 shown in Fig. 3 includes a first lamination glass member 21, a second lamination glass member 22 and the interlayer film 11. The interlayer film 11 is arranged between the first lamination glass member 21 and the second lamination glass member 22 and to be sandwiched therebetween.

The first lamination glass member 21 is layered on a first surface 11a of the interlayer film 11. The second lamination glass member 22 is layered on a second surface 11b opposite to the first surface 11a of the interlayer film 11. The first lamination glass member 21 is arranged on an outer surface 2a of the first resin layer 2 and to be layered thereon. The second lamination glass member 22 is arranged on an outer surface 3a of the second resin layer 3 and to be layered thereon.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly (meth) acrylic resin plate, and the like. Examples of the poly(meth)acrylic resin plate include a polymethyl (meth)acrylate plate, and the like.

It is preferred that the first lamination glass member be the first glass plate. It is preferred that the second lamination glass member be the second glass plate.

The thickness of each of the first and second lamination glass members is preferably 1 mm or more, more preferably 1.8 mm or more, further preferably 2 mm or more, especially preferably 2.1 mm or more and is preferably 5 mm or less, more preferably 3 mm or less. When the first and second lamination glass members are glass plates, the thickness of the glass plate is preferably 1 mm or more, more preferably 1.8 mm or more, further preferably 2 mm or more, especially preferably 2.1 mm or more and is preferably 5 mm or less, more preferably 3 mm or less, further preferably 2.6 mm or less. When the first, second lamination glass members are PET films, the thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70 to 110°C to obtain a preliminarily press-bonded laminate. Next, by putting the preliminarily press-bonded laminate into an autoclave or by pressing the laminate, the laminate is press-bonded at about 120 to 150°C and under a pressure of 1 to 1.5 MPa. In this way, laminated glass can be obtained. At the time of manufacturing the laminated glass, the layers may be layered.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described specifically with reference to examples and comparative examples. The present invention is not limited only to the following examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

(Thermoplastic resin)
   Polyvinyl acetal resin (PVB, average polymerization degree: 1700, content of hydroxyl group: 30.5% by mole, acetylation degree: 1% by mole, acetalization degree: 68.5% by mole)
(Plasticizer)
   3GO: Triethylene glycol di-2-ethylhexanoate
(Metal salt)
   Mg mixture (mixture (50:50 (weight ratio)) of magnesium 2-ethylbutyrate and magnesium acetate)
(Ultraviolet ray screening agent)
   Tinuvin326: 2-(2'-hydroxy-3'-t-butyl-5-methylphenyl)-5-chlorobenzotriazole ("Tinuvin 326" available from BASF Japan Ltd.)
(Oxidation inhibitor)
   BHT: 2,6-di-t-butyl-p-cresol

The following polyethylene terephthalate film was prepared.

Nano90S (multilayer polyethylene terephthalate film, "Multilayer Nano 90S" available from Sumitomo 3M Limited, 75 µm thick)
XIR-75 (metal layer-containing polyethylene terephthalate film, "XIR-75" available from Southwall Technologies, Inc., 50 µm thick)
Lumirror T60 (monolayer polyethylene terephthalate film, "Lumirror T60" available from TORAY INDUSTRIES, INC., 100 µm thick)
ST-22 (multilayer polyethylene terephthalate film, "ST-22" available from TORAY INDUSTRIES, INC., 100 µm thick)

The later-described aging conditions are shown in Table 1 below.

**[Table 1]**

| | Aging temperature, aging humidity, and aging time |
|---|---|
| Aging condition A | 25°C, 25%RH, and 8 hours |
| Aging condition B | 50°C, 95%RH, and 2 minutes |
| Aging condition C | 50°C, 95%RH, and 5 minutes |
| Aging condition D | 50°C, 95%RH, and 7 minutes |
| Aging condition E | 50°C, 95%RH, and 10 minutes |
| Aging condition F | 50°C, 95%RH, and 20 minutes |

### (Example 1)

### Preparation of layer for formation of first resin layer:

The following ingredients were mixed, and kneaded sufficiently with a mixing roll to obtain a composition for forming a first resin layer.

PVB: 100 parts by weight
3GO: 40 parts by weight
Mg mixture: An amount that gives a magnesium amount of 70 ppm in the obtained first resin layer
Tinuvin326: An amount of 0.2% by weight in the obtained first resin layer
BHT: An amount of 0.2% by weight in the obtained first resin layer

The obtained composition for forming a first resin layer was extruded with an extruder to obtain a layer for formation of first resin layer.

### Preparation of layer for formation of second resin layer:

The following ingredients were mixed, and kneaded sufficiently with a mixing roll to obtain a composition for forming a second resin layer.

PVB: 100 parts by weight
3GO: 40 parts by weight
Mg mixture: An amount that gives a magnesium amount of 70 ppm in the obtained second resin layer
Tinuvin326: An amount of 0.2% by weight in the obtained second resin layer
BHT: An amount of 0.2% by weight in the obtained second resin layer

The obtained composition for forming a second resin layer was extruded with an extruder to obtain a layer for formation of second resin layer.

Each of the obtained layer for formation of first resin layer, and the obtained layer for formation of second resin layer was aged in the aging condition A described in Table 1.

Next, the layer for formation of first resin layer, the polyethylene terephthalate film described in Table 2, and the layer for formation of second resin layer were layered in this order, and pressed with a pressing roll under the condition of 100°C and 0.2 MPa to obtain an interlayer film. In the obtained interlayer film, each of the first resin layer and the second resin layer had a rectangular shape, and each of the first resin layer and the second resin layer had a thickness of 380 µm.

### Preparation of laminated glass:

Two sheets of clear glass conforming to JIS R3202:1996 having a thickness of 2 mm were prepared. The obtained interlayer film was sandwiched between the two sheets of clear glass to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass (10 cm in longitudinal length × 10 cm in transversal length). The obtained laminated glass corresponds to the laminated glass X.

### (Examples 2 to 8 and Comparative Examples 1 to 6)

An interlayer film and a laminated glass (laminated glass X) were obtained in the same manner as in Example 1 except that the kind of the polyethylene terephthalate film and the aging condition were changed as shown in the following table.

### (Reference examples A to F)

An interlayer film and a laminated glass (laminated glass X) were obtained in the same manner as in Example 1 except that the polyethylene terephthalate film was not used and the aging condition was changed as shown in the following table.

### (Evaluation)

### (1) Absorbance

In the obtained laminated glass (laminated glass X), the position of 3 cm from one end toward the other end was referred to as a first position, and the position of 5 cm from one end toward the other end was referred to as a second position. Absorbance at each of the first position and the second position of the laminated glass X was measured using a near-infrared spectrophotometer ("V-570" available from JASCO Corporation) under the conditions: a bandwidth of 2 nm, a scanning speed of 1000 nm/minute, a scanning range of 1550 nm to 2050 nm and a data capture interval of 0.5 nm. Next, at the same wavelength, absorbance at the first position and absorbance at the second position were averaged, and an absorbance spectrum was prepared from the averaged absorbances.

In the prepared absorbance spectrum, the line connecting the position of absorbance at a wavelength of 1873 nm and the position of absorbance at a wavelength of 1984 nm was set as a baseline for absorbance A. An absolute value of difference between absorbance at a wavelength of 1930 nm on the baseline for absorbance A, and absorbance at a wavelength of 1930 nm on the prepared absorbance spectrum was defined as absorbance A at a wavelength of 1930 nm of the interlayer film.

An absolute value of difference between absorbance at a wavelength of 1670 nm on the prepared absorbance spectrum, and absorbance at a wavelength of 1705 nm on the prepared absorbance spectrum was defined as absorbance B at a wavelength of 1705 nm of the interlayer film.

Also, from the obtained absorbance A and absorbance B, a ratio (absorbance A/absorbance B) was calculated.

### (2) Heat resistance test at 100°C (haze value)

The obtained laminated glass (laminated glass X) was left to stand in a constant-temperature vessel at 100°C. For the laminated glass before standing in the constant temperature vessel, and the laminated glasses after standing in the constant temperature vessel for 7 days, 14 days, 28 days, and 56 days, a haze value was measured in the following manner.

In the obtained laminated glass (laminated glass X), the position of 3 cm from one end toward the other end was referred to as a first position, and the position of 5 cm from one end toward the other end was referred to as a second position. At each of the first position and the second position, a haze value was measured in accordance with JIS K6714. An average value of the haze value at the first position and the haze value at the second position was defined as a haze value of the laminated glass.

Also, the haze value of the laminated glass before standing in the constant temperature vessel was subtracted from the haze value of the laminated glass after standing in the constant temperature vessel for 56 days, and the resultant value was defined as a variation in haze value (Day0-Day56).

The details and results are shown in Tables 2 to 5 below.

**[Table 2]**

| | | | Example 1 | Comparative Example 1 | Example 2 | Comparative Example 2 |
|---|---|---|---|---|---|---|
| Kind of polyethylene terephthalate film | | | Nano 90S | Nano 90S | XIR-75 | XIR-75 |
| Aging condition | | | A | E | A | E |
| Absorbance A (wavelength: 1930 nm) | | | 0.031 | 0.107 | 0.047 | 0.155 |
| Ratio (absorbance A/absorbance B) | | | 0.15 | 0.55 | 0.18 | 0.63 |
| Heat resistance test at 100°C (haze value) | Standing time at 100°C | 0 day (before standing) | 0.58 | 0.55 | 0.54 | 0.62 |
| | | 7 days | 0.58 | 4.27 | 0.63 | 9.93 |
| | | 14 days | 0.61 | 3.19 | 0.69 | 9.46 |
| | | 28 days | 0.60 | 3.88 | 0.71 | 9.19 |
| | | 56 days | 0.70 | 2.93 | 0.74 | 8.25 |
| | Variation in haze value (Day0-Day56) | | 0.120 | 2.380 | 0.200 | 7.630 |

**[Table 3]**

| | | | Example 3 | Example 4 | Comparative Example 3 | Comparative Example 4 |
|---|---|---|---|---|---|---|
| Kind of polyethylene terephthalate film | | | Lumirror T60 | Lumirror T60 | Lumirror T60 | Lumirror T60 |
| Aging condition | | | A | C | E | F |
| Absorbance A (wavelength: 1930 nm) | | | 0.032 | 0.077 | 0.115 | 0.142 |
| Ratio (absorbance A/absorbance B) | | | 0.17 | 0.39 | 0.58 | 0.78 |
| Heat resistance test at 100°C (haze value) | Standing time at 100°C | 0 day (before standing) | 1.51 | 1.55 | 1.70 | 1.67 |
| | | 7 days | 1.52 | 1.58 | 1.89 | 6.90 |
| | | 14 days | 1.52 | 1.58 | 2.16 | 8.13 |
| | | 28 days | 1.53 | 1.62 | 2.39 | 9.02 |
| | | 56 days | 1.52 | 1.82 | 2.67 | 10.04 |
| | Variation in haze value (Day0-Day56) | | 0.015 | 0.275 | 0.965 | 8.375 |

**[Table 4]**

| | | | Example 5 | Example 6 | Example 7 | Example 8 | Comparative Example 5 | Comparative Example 6 |
|---|---|---|---|---|---|---|---|---|
| Kind of polyethylene terephthalate film | | | ST-22 | ST-22 | ST-22 | ST-22 | ST-22 | ST-22 |
| Aging condition | | | A | B | C | D | E | F |
| Absorbance A (wavelength: 1930 nm) | | | 0.034 | 0.061 | 0.086 | 0.100 | 0.113 | 0.146 |
| Ratio (absorbance A/absorbance B) | | | 0.16 | 0.30 | 0.42 | 0.48 | 0.56 | 0.73 |
| Heat resistance test at 100°C (haze value) | Standing time at 100°C | 0 day (before standing) | 0.38 | 0.48 | 0.53 | 0.54 | 0.42 | 0.44 |
| | | 7 days | 0.40 | 0.52 | 0.55 | 0.56 | 3.32 | 6.10 |
| | | 14 days | 0.40 | 0.52 | 0.56 | 0.61 | 3.30 | 8.14 |
| | | 28 days | 0.42 | 0.54 | 0.62 | 0.75 | 2.04 | 7.56 |
| | | 56 days | 0.43 | 0.55 | 0.66 | 0.94 | 3.44 | 9.20 |
| | Variation in haze value (Day0-Day56) | | 0.050 | 0.075 | 0.125 | 0.400 | 3.015 | 8.755 |

**[Table 5]**

| | | | Reference Example A | Reference Example B | Reference Example C | Reference Example D | Reference Example E | Reference Example F |
|---|---|---|---|---|---|---|---|---|
| Kind of polyethylene terephthalate film | | | N/A | N/A | N/A | N/A | N/A | N/A |
| Aging condition | | | A | B | C | D | E | F |
| Absorbance A (wavelength: 1930 nm) | | | 0.03 | 0.06 | 0.08 | 0.10 | 0.11 | 0.14 |
| Ratio (absorbance A/absorbance B) | | | 0.14 | 0.26 | 0.37 | 0.47 | 0.55 | 0.72 |
| Heat resistance test at 100°C (haze value) | Standing time at 100°C | 0 day (before standing) | 0.28 | 0.30 | 0.39 | 0.39 | 0.30 | 0.34 |
| | | 7 days | 0.28 | 0.30 | 0.40 | 0.40 | 0.32 | 0.40 |
| | | 14 days | 0.29 | 0.31 | 0.40 | 0.42 | 0.32 | 0.39 |
| | | 28 days | 0.28 | 0.29 | 0.37 | 0.41 | 0.33 | 0.37 |
| | | 56 days | 0.27 | 0.29 | 0.38 | 0.38 | 0.34 | 0.43 |
| | Variation in haze value (Day0-Day56) | | -0.015 | -0.015 | -0.010 | -0.010 | 0.040 | 0.090 |

As shown in Tables 2 to 4, when the ratio (absorbance A/absorbance B) is 0.50 or less, it is possible to keep the haze value low when a heat resistance test at 100°C is conducted for the laminated glass, although the interlayer film has a polyethylene terephthalate film. On the other hand, as shown in Table 5, when the interlayer film does not have a polyethylene terephthalate film, the problem that the haze value of the laminated glass is high in the heat resistance test at 100°C does not arise.

### EXPLANATION OF SYMBOLS

1: Polyethylene terephthalate film
1a: First surface
1b: Second surface
2: First resin layer
2a: Outer surface
3: Second resin layer
3a: Outer surface
11: Interlayer film
11a: First surface
11b: Second surface
21: First lamination glass member
22: Second lamination glass member
31: Laminated glass

## Claims

1. An interlayer film for laminated glass comprising:
a first resin layer containing a thermoplastic resin;
a polyethylene terephthalate film; and
a second resin layer containing a thermoplastic resin, in this order, and having
a ratio of absorbance A at a wavelength of 1930 nm to absorbance B at a wavelength of 1705 nm of 0.50 or less.

2. The interlayer film for laminated glass according to claim 1, wherein the polyethylene terephthalate film is a multilayer polyethylene terephthalate film having two or more polyethylene terephthalate layers and not having a metal layer, or a metal layer-containing polyethylene terephthalate film having a polyethylene terephthalate layer and a metal layer.

3. The interlayer film for laminated glass according to claim 1 or 2, wherein
the thermoplastic resin contained in the first resin layer includes a polyvinyl acetal resin, and
the thermoplastic resin contained in the second resin layer includes a polyvinyl acetal resin.

4. A method for producing an interlayer film for laminated glass, the method being a method for producing the interlayer film for laminated glass according to any one of claims 1 to 3, the method comprising the steps of:
obtaining a laminate having a layer for formation of first resin layer containing a thermoplastic resin, a polyethylene terephthalate film, and a layer for formation of second resin layer containing a thermoplastic resin in this order; and
aging the laminate so that a ratio of absorbance A at a wavelength of 1930 nm to absorbance B at a wavelength of 1705 nm in the obtained interlayer film is 0.50 or less.

5. A method for producing an interlayer film for laminated glass, the method being a method for producing the interlayer film for laminated glass according to any one of claims 1 to 3, the method comprising the step of
aging at least one layer of a layer for formation of first resin layer containing a thermoplastic resin, or a layer for formation of second resin layer containing a thermoplastic resin so that a ratio of absorbance A at a wavelength of 1930 nm to absorbance B at a wavelength of 1705 nm in the obtained interlayer film is 0.50 or less.

6. A laminated glass comprising:
a first lamination glass member;
a second lamination glass member; and
the interlayer film for laminated glass according to any one of claims 1 to 3,
the interlayer film for laminated glass being arranged between the first lamination glass member and the second lamination glass member.
